# EUROPEAN PATENT APPLICATION

(11) **EP 4 123 928 A1**
(43) Date of publication of application: **25.01.2023**
(21) Application number: 20925260.0
(22) Date of filing: 19.03.2020
(51) Int. Cl.: H04J 13/22

(54) **TERMINAL, WIRELESS COMMUNICATION METHOD, AND BASE STATION**

(71) Applicant: NTT DOCOMO, INC., Chiyoda-Ku Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2020/012377
(87) International publication number: WO 2021/186688

(57) **Abstract**

A terminal according to one aspect of the present disclosure includes a receiving section that receives configuration information indicating the number of symbols greater than 2 for a physical uplink control channel (PUCCH), and a control section that applies, based on the configuration information, a cyclic shift based on uplink control information to the PUCCH. According to one aspect of the present disclosure, even when transmitting a PUCCH with more than two symbols, it is possible to perform appropriate transmission of the PUCCH.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

In existing LTE systems (for example, 3GPP Rel. 8 to Rel. 14), a user terminal (User Equipment (UE)) transmits uplink control information (UCI) by using an uplink control channel (for example, a Physical Uplink Control Channel (PUCCH)) or an uplink data channel (for example, a Physical Uplink Shared Channel (PUSCH)). A structure (format) of the uplink control channel is referred to as a PUCCH format (PF), and so on.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In Rel-17 (or later versions) NR, when UCI is transmitted with use of an uplink control channel (for example, a PUCCH), unless the PUCCH is transmitted appropriately, the UCI may be recognized improperly by a network (NW, radio base station, gNB, or the like).

The present invention has been made in view of such points, and an object of the present disclosure is to provide a terminal, a radio communication method, and a base station that transmit an uplink control channel appropriately.

### Solution to Problem

A terminal according to one aspect of the present disclosure includes a receiving section that receives configuration information indicating the number of symbols greater than 2 for a physical uplink control channel (PUCCH), and a control section that applies, based on the configuration information, a cyclic shift based on uplink control information to the PUCCH.

### Advantageous Effects of Invention

According to one aspect of the present disclosure, even when transmitting a PUCCH with more than two symbols, it is possible to perform appropriate transmission of the PUCCH.

### Brief Description of Drawings

FIG. 1 is a diagram to show an example of a link-budget calculation result;
FIGS. 2A to 2C are diagrams to show an example of a comparison between a DMRS-based PUCCH and a sequence-based PUCCH;
FIG. 3 is a diagram to show an example of UCI transmission using PF 0;
FIG. 4 is a diagram to show an example of cyclic shift indices for PF 0;
FIG. 5 is a diagram to show an example of a new PUCCH format (PF) for a sequence-based long PUCCH;
FIG. 6 is a diagram to show an example in which repetitive transmissions are applied to a new PF;
FIG. 7 is a diagram to show an example of phase contiguity of a new PF;
FIG. 8 is a diagram to show an example of symbols of a sequence-based long PUCCH to which a time domain OCC is applied;
FIG. 9 is a diagram to show an example of relation between the numbers of PUCCH symbols and OCC lengths in a case where a time domain OCC for a sequence-based long PUCCH is applied;
FIG. 10 is a diagram to show an example of an OCC applied to odd-numbered or even-numbered symbols of a new PF;
FIG. 11 is a diagram to show an example of relation between OCC lengths and OCC sequences;
FIGS. 12A and 12B are diagrams to show examples of time domain OCC application without frequency hopping application to a new PF;
FIGS. 13A and 13B are diagrams to show examples of time domain OCC application with frequency hopping application to a new PF;
FIGS. 14A and 14B are diagrams to show examples of multiplexing with existing PF 1 in a case where an OCC is not applied explicitly;
FIG. 15 is a diagram to show an example of transmission of UCI with 2 or more bits in a sequence-based long PUCCH;
FIG. 16 is a diagram to show an example of transmission of UCI with 2 or more bits by CS selection/OCC selection in a sequence-based long PUCCH;
FIG. 17 is a diagram to show an example of an OCC sequence used for transmission of UCI;
FIG. 18 is a diagram to show an example of a schematic structure of a radio communication system according to one embodiment;
FIG. 19 is a diagram to show an example of a structure of a base station according to one embodiment;
FIG. 20 is a diagram to show an example of a structure of a user terminal according to one embodiment; and
FIG. 21 is a diagram to show an example of a hardware structure of the base station and the user terminal according to one embodiment.

### Description of Embodiments

### (PUCCH Format)

For future radio communication systems (for example, Rel. 15 (or later versions), 5G, NR, and the like), a structure (also referred to as a format, a PUCCH format (PF), and so on) for an uplink control channel (for example, a PUCCH) used for transmission of uplink control information (UCI) is under study. For example, for Rel-15 NR, supporting five types of PF 0 to PF 4 is under study. Note that names of PFs described below are just illustrative examples, and different names may be used.

For example, PF 0 and PF 1 are PFs used for transmission of UCI with 2 bits or less (up to 2 bits). For example, the UCI may be at least one of transmission confirmation information (also referred to as Hybrid Automatic Repeat reQuest-Acknowledgement (HARQ-ACK), acknowledgement (ACK), negative-acknowledgement (NACK), or the like) and scheduling request (SR). PF 0 can be allocated to 1 or 2 symbols, and thus is also referred to as a short PUCCH, a sequence-based short PUCCH, and so on. On the other hand, PF 1 can be allocated to 4 to 14 symbols, and thus is also referred to as a long PUCCH and so on. PF 0 may transmit a sequence obtained by a cyclic shift of a base sequence by using a cyclic shift corresponding to a value of the UCI. In PF 1, a plurality of user terminals may be code-division multiplexed (CDM) in an identical physical resource block (PRB) by time-domain block-wise spreading using at least one of CS and time domain (TD)-orthogonal cover codes (OCCs).

PF 2 to PF 4 are PFs used for transmission of UCI (for example, channel state information (CSI) or at least one of CSI, HARQ-ACK, and SR) with more than 2 bits. PF 2 can be allocated to 1 or 2 symbols, and thus is also referred to as a short PUCCH and so on. On the other hand, PF 3 and PF 4 can be allocated to 4 to 14 symbols, and thus are also referred to as long PUCCHs and so on. In PF 4, CDM may be performed for a plurality of user terminals with use of block-wise spreading before DFT (with a frequency domain (FD)-OCC).

Intra-slot frequency hopping may be applied to PF 1, PF 3, and PF 4. Let a length of a PUCCH be N*_{symb}*, and then a pre-frequency-hopping (first hop) length may be floor(N*_{symb}*/2), and a post-frequency-hopping (second hop) length may be ceil (N*_{symb}*/2).

A waveform of PF 0, PF 1, and PF 2 may be Cyclic Prefix (CP)-Orthogonal Frequency Division Multiplexing (OFDM). A waveform of PF 3 and PF 4 may be Discrete Fourier Transform (DFT)-spread(s)-OFDM.

Allocation of a resource (for example, a PUCCH resource) used for transmission of the uplink control channel may be performed with use of higher layer signaling and/or downlink control information (DCI). Here, it is only necessary that the higher layer signaling is, for example, at least one of RRC (Radio Resource Control) signaling, system information (for example, at least one of RMSI (Remaining Minimum System Information), OSI (Other System Information), an MIB (Master Information Block), and an SIB (System Information Block)), and broadcast information (PBCH (Physical Broadcast Channel)).

In NR, the number of symbols allocated to the PUCCH (which may be referred to as PUCCH allocation symbols, PUCCH symbols, and so on) can be determined in any one of a slot-specific manner, a cell-specific manner, and a user terminal-specific manner or a combination of these. It is expected that as the number of PUCCH symbols is increased, a communication range (coverage) extends, and thus, for example, an operation is assumed that the farther a user terminal is from a base station (for example, eNB or gNB), the more the number of symbols is.

Relation between the number of PUCCH symbols and the coverage will be described with use of a result of link-budget calculation.

As conditions for the link-budget calculation, an antenna structure is 1 transmission antenna and 2 reception antenna, carrier frequency is 4 GHz, SCS is 15 kHz, a channel model is EPA (Extended Pedestrian A), and a UCI payload length is 2 bits.

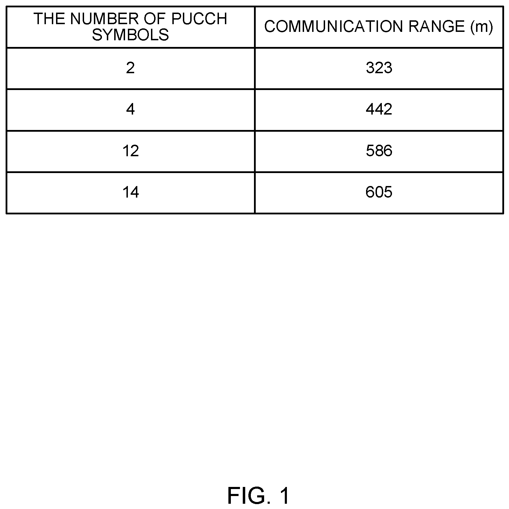

FIG. 1 is a diagram to show an example of the link-budget calculation result. As shown in this diagram, an increase in the number of PUCCH symbols allows signal energy to be increased, and the coverage is improved (enhanced).

In NR, as an uplink control channel structure (PUCCH format) used for transmission of the HARQ-ACK, a PUCCH format used for UCI transmission with a certain number of bits or less and a PUCCH format used for transmission of UCI with more than the certain number of bits are supported. The PUCCH format used for UCI transmission with the certain number of bits or less (for example, 2 bits or less (up to 2 bits)) may be referred to as PUCCH format 0 or PUCCH format 1 (PF 0 or PF 1). The PUCCH format used for transmission of UCI with more than the certain number of bits (for example, more than 2 bits) may be referred to as PUCCH format 2 to PUCCH format 4 (PF 2, PF 3, and PF 4).

PF 0 or PF 1 uses a sequence (for example, a low PAPR sequence).

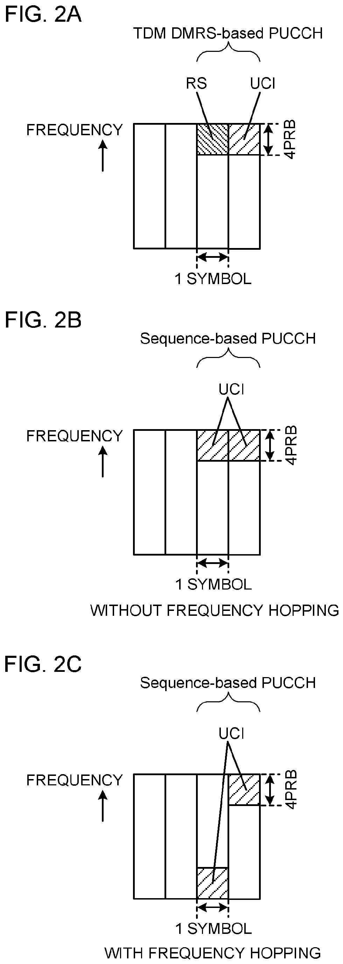

FIGS. 2A to 2C are diagrams to show an example of a comparison between a DMRS-based PUCCH and a sequence-based PUCCH.

FIG. 2A is a diagram to show an example of the DMRS-based PUCCH. The DMRS-based PUCCH may be a time division multiplexing (TDM) DMRS-based PUCCH, or may be a frequency division multiplexing (FDM) DMRS-based PUCCH. The TDM DMRS-based PUCCH corresponds to PF 1, and the FDM DMRS-based PUCCH corresponds to PF 2. For example, the TDM DMRS-based PUCCH shown in FIG. 2A allocates a DMRS and UCI to different symbols to perform TDM.

In a case of the TDM DMRS-based PUCCH, 50% of signal energy is used for DMRS transmission, and 50% of the signal energy is used for transmission of the UCI.

FIGS. 2B and 2C are diagrams to show examples of the sequence-based PUCCH. For example, the sequence-based PUCCH allocates a sequence obtained by a cyclic shift based on the UCI to a symbol without using the DMRS. The sequence-based PUCCH corresponds to PF 0.

In a case of the sequence-based PUCCH, 100% of the signal energy is used for transmission of the UCI.

Thus, in the case of the sequence-based PUCCH, 100% of the signal energy is used for transmission of the UCI, and thus an effect on link budget improvement can be obtained as compared to the case of the TDM DMRS-based PUCCH.

As shown in FIG. 2B, frequency hopping may not be applied to the sequence-based PUCCH, or as shown in FIG. 2C, frequency hopping may be applied to the sequence-based PUCCH. Therefore, frequency diversity gain can be obtained.

As PF 0, a sequence with a sequence length of 12 is mapped to consecutive 12 REs (Resource Elements) in a PRB (Physical Resource Block). A sequence with a sequence length of 24 or 48 may be used. A sequence of PF 0 and another sequence may be multiplexed with use of code division multiplexing (CDM) or FDM. In the sequence of PF 0, a cyclic shift (CS or phase rotation) is applied to a base sequence (reference sequence).

The base sequence may be a CAZAC (Constant Amplitude Zero AutoCorrelation) sequence (for example, a low PAPR (peak-to-average power ratio) sequence) such as a Zadoff-Chu sequence or the like, may be a sequence (for example, a low PAPR sequence or a sequence given by a table) defined by specifications, or may be a sequence (CG-CAZAC (computer generated CAZAC) sequence) pursuant to the CAZAC sequence. For example, the PUCCH with a bandwidth of 1 PRB may use one of a certain number (which may be, for example, 30, 60, or a certain value determined by a base sequence length) of sequences defined by specifications as the base sequence. The base sequence may be used for the UCI, or may be used for the DMRS.

A case where the PUCCH of PF 0 transmits 2-bit UCI by using the CS will be described. The CS may be expressed by a phase rotation amount, and thus may be rephrased as the phase rotation amount. A plurality of candidates for the CS (CS candidates) allocated to one user terminal are referred to as a CS candidate set (CS amount set, CS amount pattern, phase rotation amount candidate set, or phase rotation amount pattern).

A sequence length of the base sequence is determined by the number M of subcarriers and the number of PRBs (Physical Resource Blocks). When the PUCCH of PF 0 is transmitted with use of a band with 1 PRB, the sequence length of the base sequence is 12 (= 12 × 1). In this case, 12 phase rotation amounts α₀ to α₁₁ (CS 0 to CS 11) having a phase interval of 2n/12 (that is, n/6) are defined. 12 sequences obtained by performing phase rotation (cyclic shifting) on one base sequence with use of respective phase rotation amounts α₀ to α₁₁ are orthogonal to each other (a cross-correlation is 0). Note that it is only necessary that phase rotation amounts α₀ to α₁₁ are defined based on at least one of the number M of subcarriers, the number of PRBs, and the sequence length of the base sequence. The CS candidate set may include two or more phase rotation amounts selected from the phase rotation amounts (cyclic shifts) α₀ to α₁₁. Indices 0 to 11 of the phase rotation amounts may be referred to as CSs (CS indices).

The PUCCH of PF 0 notifies UCI including at least any one of HARQ-ACK (ACK/NACK or A/N), CSI, and SR.

For example, when the UCI is 1 bit indicating the HARQ-ACK, UCI values 0 and 1 may correspond to "NACK" (negative acknowledgment) and "ACK" (positive acknowledgment), respectively. For example, when the UCI is 2 bits indicating the HARQ-ACK, UCI values 00, 01, 11, and 10 may correspond to "NACK-NACK," "NACK-ACK," "ACK-ACK," and "ACK-NACK," respectively.

For example, when the UCI is 2 bits, the user terminal transmits a signal to which a CS corresponding to a value to be transmitted out of four candidates (UCI candidates or candidate values) for the 2-bit UCI by using a given time/frequency resource. The time/frequency resource is a time resource (for example, a symbol or the like) and/or a frequency resource (for example, a PRB or the like).

The user terminal performs, as transmitting signal generation processing for the PUCCH of PF 0, phase rotation (cyclic shifting) on reference sequences X₀ to X_{M-1} with sequence length M by using selected phase rotation amounts (CSs), and inputs the phase-rotated reference sequences into a CP-OFDM (Cyclic Prefix-Orthogonal Frequency Division Multiplexing) transmitter or a DFT-S-OFDM (Discrete Fourier Transform-Spread-Orthogonal Frequency Division Multiplexing) transmitter. The user terminal transmits an output signal from the CP-OFDM transmitter or the DFT-S-OFDM transmitter.

Next, decoding of UCI notified by the PUCCH of PF 0 will be described. Here, a reception judging operation in a case where the UCI is notified by selection of phase rotation amounts will be described, but the operation is similar even when the UCI is notified by selection of resources of another type (for example, reference sequences or time/frequency resources) or a combination of a plurality of types of resources.

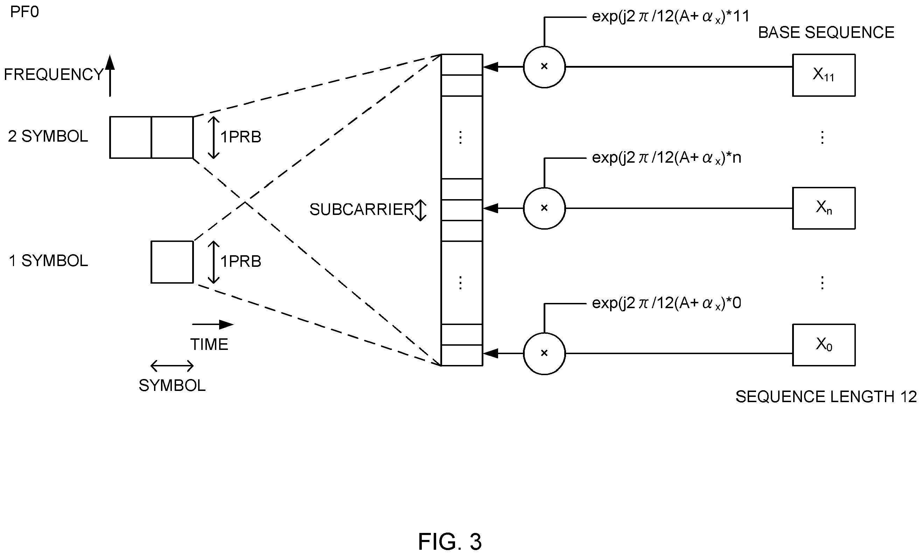

FIG. 3 is a diagram to show an example of UCI transmission using PF 0. As shown in FIG. 3, PF 0 maps a sequence obtained by performing cyclic shifting on 12-bit base sequences X₀, ..., X₁₁ to 1 PRB by using a cyclic shift (phase rotation) based on α*ₘ* corresponding to values of an initial cyclic shift α*ₘ₀* and the UCI (at least one of the HARQ-ACK and SR). An initial cyclic shift index mo indicating the initial cyclic shift may be configured by higher layer signaling.

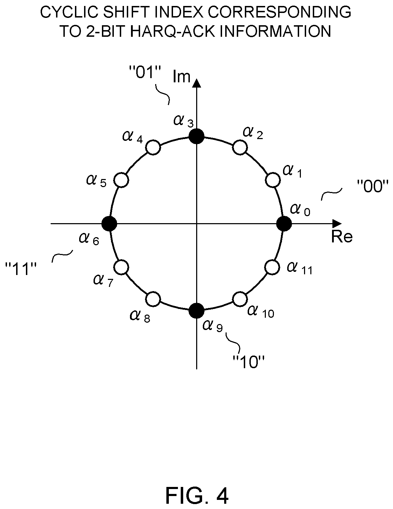

FIG. 4 is a diagram to show an example of cyclic shift indices for PF 0. For example, as shown in FIG. 4, cyclic shift index offsets (cyclic shift index offset or cyclic shift values) corresponding to 2-bit HARQ-ACK information {00 (NACK-NACK), 01 (NACK-ACK), 11 (ACK-ACK), and 10 (ACK-NACK)} are 0, 3, 6, and 9, respectively. When expressed by phases, these offsets are α₀ = 0, α₃ = π/2, α₆ = π, and α₉ = 3π/2. The indices of the cyclic shift are obtained by adding the offsets to the initial cyclic shift index.

For transmission of such a sequence-based PUCCH, a network (NW, for example, base station) may detect any one of "ACK," "NACK," and "without ACK/NACK" in a frequency domain. "Without ACK/NACK" may be a case where a valid DL control signal to schedule DL data is not detected. "Without ACK/NACK" may be interpreted as discontinuous reception (discontinuous transmission (DTX)).

The network may judge the UCI based on a received signal by using maximum likelihood detection (MLD, which may be referred to as or correlation detection). Specifically, the network may generate a replica of each phase rotation amount (phase rotation amount replica) allocated to the user terminal (for example, when a UCI payload length is 2 bits, the network generates 4 patterns of phase rotation amount replicas), and may generate a transmitting signal waveform similarly to the user terminal by using the reference sequence and the phase rotation amount replica. The network may calculate a correlation between the resultant transmitting signal waveform and a received signal waveform received from the user terminal for all phase rotation amount replicas, and may estimate that the most correlated phase rotation amount replica has been transmitted.

More specifically, the network may multiply each element of a received signal sequence with size M after DFT (M complex-number sequences) by the complex conjugates of transmitting signal sequences (M complex-number sequences) obtained by applying phase rotation of phase rotation amount replicas to the reference sequence for the transmitting signal, and may assume that the phase rotation amount replica with the largest absolute value (or square value of the absolute value) of the sum of the M resultant sequences has been transmitted.

Alternatively, the network may generate transmitting signal replicas for a maximum number of allocated phase rotation amounts (twelve for 1 PRB), and may estimate the phase rotation amount most correlated with a received signal in an operation similar to the above-described MLD. When a phase rotation amount other than the allocated phase rotation amounts is estimated, the network may estimate that the phase rotation amount closest to the estimated phase rotation amount out of the allocated phase rotation amounts has been transmitted.

When a correlation exceeding a threshold value (for example, a DTX threshold value) is not detected on a received signal in the PUCCH resource, the network may detect the DTX, and may assume that the DL data is not received properly (that is, NACK).

Therefore, a PF having the largest coverage out of the PFs is PF 1 to which 14 symbols are allocated and to which frequency hopping is applied. Applying repetitive transmission (repetition) between slots can further improve (enhance) the coverage.

In future (for example, Rel. 17 (or later versions)) radio communication systems, it is preferable that the coverage is further enhanced. However, the coverage is limited by existing PUCCH formats.

The inventors of the present invention focused on the necessity of defining a new PF for coverage improvement (enhancement), and came up with the idea of the invention of the present application. Using a sequence-based PUCCH longer than 2 symbols as a new PUCCH format can obtain a greater effect on link budget improvement as compared to that of PF 1 with the same length. Coverage equivalent to 14 symbols × 2 slots of existing PF 1 can be obtained by 14 symbols × 1 slot of the sequence-based PUCCH, and thus an effect on coverage improvement is expected.

Embodiments according to the present disclosure will be described in detail with reference to the drawings as follows. Note that embodiments below may each be used individually, or a combination of at least two of the embodiments may be employed.

Note that names of PFs are not limited to names (PFa, PFb, PFc, and the like) described in respective embodiments, and may be interpreted as another number, alphabet, sign, combination of these, and the like.

### (Radio Communication Method)

### <First Embodiment>

A new PUCCH format (PF) for a sequence-based long PUCCH may be defined (supported).

In the present disclosure, the sequence-based long PUCCH, a PUCCH in which a reference signal is not inserted, and a PUCCH in which UCI is transmitted by selection of a sequence may be interchangeably interpreted.

A method for transmitting the UCI with use of the new PF may use a cyclic shift based on a value of the UCI similarly to existing PF 0. A user terminal may map a sequence obtained by performing, on a base sequence, a cyclic shift based on an uplink control information to a frequency domain to transmit the sequence.

In a method for allocating resources with use of the new PF, each PUCCH resource configured for the user terminal may include a value of at least one parameter (also referred to as field, information, or the like) as follows. Note that a possible value range for each PUCCH format may be determined for each parameter.
- A new PUCCH format indicator (higher layer parameter format)
- A symbol index (start symbol index) in which PUCCH allocation is started
- The number of symbols allocated to the PUCCH in a slot (duration allocated to the PUCCH) (which may be a range of 4 to 14 symbols, or may be a range of 1 to 14 symbols)
- Whether frequency hopping is enabled for the PUCCH
- A frequency resource index before frequency hopping (first hop) and frequency resource index after frequency hopping (second hop) in a case where frequency hopping is enabled
- An index of the initial cyclic shift (CS)
- An index of a resource block (physical resource block (PRB)) in which PUCCH allocation is started
- The number (size) of PRBs allocated to the PUCCH
- An index of an orthogonal cover code (for example, an Orthogonal Cover Code (OCC)) in a time domain or a length of an OCC (also referred to as an OCC length, a spreading factor, and so on) used for block-wise spreading before discrete Fourier transform (DFT) in the time domain
- An index of an OCC used for block-wise spreading after the DFT

A plurality of sequences/CSs for ACK/NACK transmission may be derived based on the above-described CS index. A method for the deriving may be similar to that of existing PF 0. Note that in the present disclosure, "A/B" may mean "at least one of A and B."

The user terminal may determine the CS index by adding offset based on a UCI (for example, HARQ-ACK) value to the initial CS index. The CS index with "NACK" and "NACK-NACK" may be determined based on at least one of the initial CS index and the start symbol index, and another CS index (with, for example, "ACK," "ACK-ACK," "NACK-ACK," "ACK-NACK," and the like) may be derived by addition of the offset.

The number (size) of PRBs may not be configured. When the number of PRBs is not configured, the user terminal may judge that the number of PRBs is 1 PRB.

The above-described OCC index may be configured, similarly to PF 1, when the number for multiplexing for the user terminal is increased in the time-domain OCC.

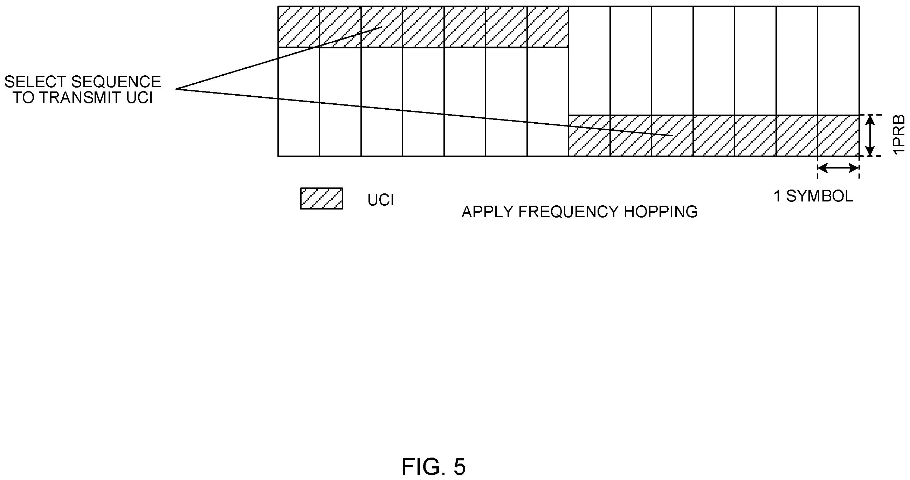

FIG. 5 is a diagram to show an example of the new PUCCH format (PF) for the sequence-based long PUCCH. In this example, frequency hopping is applied.

As part of PUCCH resource allocation configured by a higher layer, an identifier (PUCCH format indicator) for discrimination between the new PF and existing PF 0/1 may be configured. For example, PF 5 (value greater than 4) may be configured as part of the PUCCH resource allocation.

When a combination of parameters absent in existing PF 0/1 is configured by the identifier, it may be determined (judged) that the new PF is configured. For example, when the PUCCH format indicator is 0 and a value with the number of symbols exceeding 2 is configured, it may be determined (judged) that the new PF is configured.

According to the above-described first embodiment, the new PF is defined (supported) in Rel-17 (or later versions) NR, and thus it is possible to appropriately control communication with use of the new PF.

### <Second Embodiment>

Intra-slot/inter-slot repetitive transmissions for existing PF 0 may be applied to a new PF.

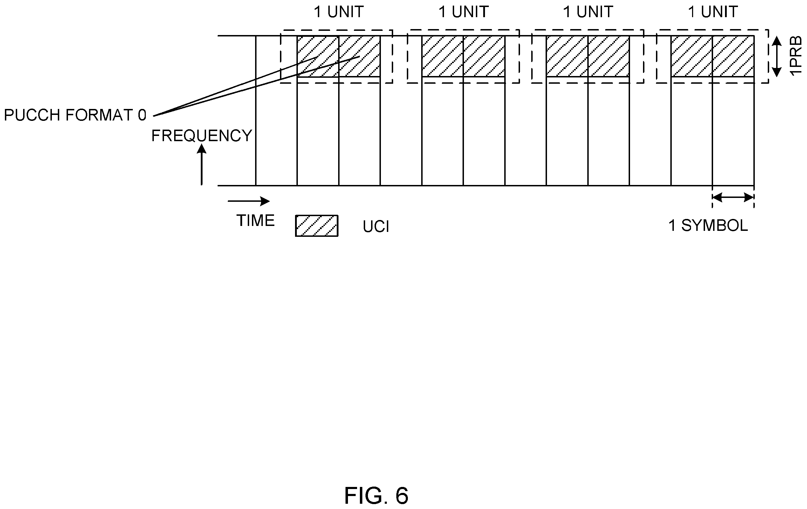

FIG. 6 is a diagram to show an example in which the repetitive transmissions are applied to the new PF.

As shown in FIG. 6, for example, 2-symbol PF 0 may be one unit for the repetitive transmissions. A user terminal may transmit UCI by repeating the transmission in the unit. In the present disclosure, a unit, a time unit, a time resource, a PUCCH resource, a transmission instance (tx instance), and a transmission occasion (tx occasion) may be interchangeably interpreted.

If a plurality of resources used for the repetitive transmissions overlap with each other in a time direction, in an overlapping symbol, it is conceivable that a characteristic of a CAZAC sequence is lost, thereby increasing a PAPR. Therefore, the plurality of resources used for the repetitive transmissions may be different from each other in the time direction (overlap in the time direction is not assumed).

The plurality of resources used for the repetitive transmissions may be different from each other in a frequency direction (overlap in the frequency direction is not assumed).

The same UCI may be repetitively transmitted for each unit, the same UCI may be coded differently and transmitted for each unit, or different UCI may be transmitted for each unit.

Limitation (constraint) may be added to configurable resources for each unit. The limitation may be limitation to each unit to transmit the same UCI, or may be limitation to each unit to transmit different UCI.

The limitation may, when each unit uses an identical frequency resource and frequency hopping is applied, be a case that respective frequency resources to which frequency hopping for each unit is applied are the same.

The limitation may, when frequency hopping is applied to 2 symbols of a first unit earlier in the time direction, be a case that a frequency resource for first hop and second hop of the first unit and a frequency resource for first hop and second hop of each subsequent unit are the same.

Frequency hopping may be applied to the first unit earlier in the time direction and a second unit, and frequency hopping may not be applied to a third unit and a fourth unit. For example, application of frequency hopping in 2 units is enough to obtain frequency diversity gain, and thus a decrease in resource usage efficiency can be suppressed as compared to that of a case where frequency hopping is applied to all units.

From the viewpoint of a NW side, all received signals can be in-phase combined on a complex plane to be detected assuming phase rotation of the same phasing for received signals using an identical frequency resource, and thus there is an effect that improves reception characteristics.

The limitation may be a case that each unit has a certain value of a time symbol interval (time interval or the number of symbols). As shown in FIG. 6, the time symbol interval of each unit may be 1 symbol. The value may be defined by specifications, may be configured by a higher layer, or may be reported as a user terminal capability. The value may be 0. In this case, the time symbol interval is 0, thereby being contiguous symbols, and thus use of a structure similar to the first embodiment is possible.

A transmitting signal in each unit may have a contiguous phase.

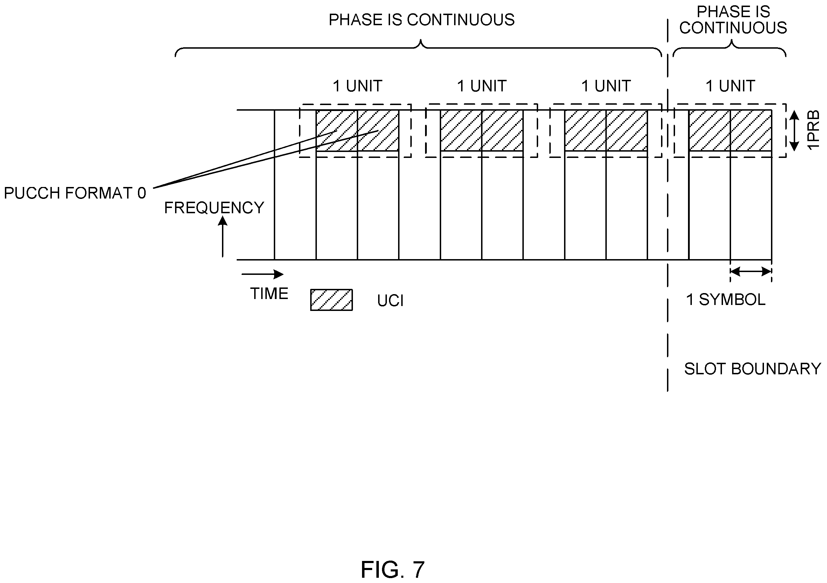

As shown in FIG. 7, symbols in each unit may have a contiguous phase in the same slot. On the other hand, in a case of crossing slots (between different slots), symbols in each unit between different slots may have a non-contiguous phase.

The unit crossing slots may not be assumed. The unit may be one limited to one slot. The user terminal may not assume one unit crossing slots.

With respect to a transmitting signal through a plurality of units, as long as the plurality of units are in the same slot, a phase may be contiguous between the plurality of units. On the other hand, when the plurality of units cross slots, the phase may be non-contiguous between the plurality of units. The phase may be contiguous between the units when contiguous symbols are between the plurality of units or the time symbol interval is a certain value or less, otherwise the phase may be non-contiguous between the units.

The phase may be contiguous between the plurality of units regardless of whether the plurality of units are in the same slot. In this case, the phase may be non-contiguous when the plurality of units cross slots, and the phase may be contiguous even when the plurality of units cross slots. Limitation that the phase is contiguous may be added between the plurality of units to transmit the same UCI.

Phase contiguity of the new PF is described above, but these may be employed regardless of whether the frequency hopping is configured (or whether frequency resources for first hop and second hop of each unit are different from each other). When the frequency hopping is configured (or the frequency resources for first hop and second hop of each unit are different from each other), these may be employed in respective frequency hop.

Therefore, the phase contiguity for the new PF is defined, and thus the NW side performs in-phase combining of received signals having the phase contiguity on a complex plane, thereby allowing the UCI to be detected with higher accuracy.

With respect to resource allocation for each unit in the new PF, in addition to parameters indicating resources for existing PF 0, at least one of parameters described below may be configured in a PUCCH resource configured by the higher layer. When the parameter is not configured, an operation corresponding to Rel. 15 may be employed.
- A frequency (PRB) index of each of the second and subsequent units
- A start symbol index of each of the second and subsequent units
- A symbol interval of each of the second and subsequent units
- The number (the number of repetitions (aggregation)) of each of the second and subsequent units

This parameter may be configured for intra-slot repetitive transmissions.

Start symbol indices of the above-described second and subsequent units may be configured as symbol indices (for example, 0 to 13) in the slot, or may be configured as differences from a start/end symbol of the last unit.

Note that the above-described configuration has higher flexibility, but considering the phase contiguity and multiplexing with the existing PF, a case that the higher flexibility is unnecessary is conceivable. Thus, the above-described configuration may be configured as described below.

The frequency resources of respective units may be the same, and frequency (PRB) indices of the second and subsequent units may not be configured. When the frequency hopping is applied, the frequency resource of each hop may be the same. When the frequency hopping is applied, an n-th unit may be an n-th hop.

The above-described start symbol index of each unit may be a predefined value or a value configured by the higher layer. For example, the start symbol index of each of the second and subsequent units may be a difference (time symbol interval) from an end symbol of the last unit, each unit may be contiguous, and the start symbol index of each of the second and subsequent units may be 0.

The above-described time symbol interval of each unit may be common, and the time symbol interval of each unit may not be configured.

With respect to the number of units (the number of repetitions), the number (the number of repetitions) for each unit may be configured in units of PUCCH resources. Alternatively, the number of repetitions may be configured in a PUCCH resource set, and each PUCCH resource in the PUCCH resource set may refer to the same value of the number of repetitions. Alternatively, the number of repetitions may be configured in a parameter (for example, PUCCH configuration information, PUCCH-config, or the like) used for configuration of PUCCH transmission, and each PUCCH resource in the PUCCH configuration information may refer to the same value of the number of repetitions. Also, the number of repetitions may be configured in a UL BWP, and each PUCCH resource in the UL BWP may refer to the same value of the number of repetitions.

In resource allocation for each unit in inter-slot repetitive transmissions with existing PF 0 for the new PF, similarly to the above-described intra-slot repetitive transmissions, flexible resource allocation may be possible.

The inter-slot repetitive transmissions may perform repetitive transmission by using, for each slot, a resource configured by the above-described intra-slot repetitive transmissions. With respect to the number of the above-described inter-slot repetitive transmissions (the number of repetitions), the number of repetitions may be configured in units of PUCCH resources. Alternatively, the number of repetitions may be configured in a PUCCH resource set, and each PUCCH resource in the PUCCH resource set may refer to the same value. Alternatively, the number of repetitions may be configured in a parameter (for example, PUCCH configuration information, PUCCH-config, or the like) used for PUCCH transmission, and each PUCCH resource in the PUCCH configuration information may refer to the same value. Alternatively, the number of repetitions may be configured in a UL BWP, and each PUCCH resource in the UL BWP may refer to the same value.

According to the above-described second embodiment, it is possible to apply repetitive transmissions to the new PF flexibly and efficiently.

### <Third Embodiment>

An orthogonal cover code (for example, an OCC (Orthogonal Cover Code)) may be applied to a new PF in a time domain. A plurality of user terminals may transmit the new PF in the same time resource and frequency resource. Each of the plurality of user terminals may multiply the new PF by a different OCC with the same length, thereby performing CDM on a plurality of PUCCHs from the plurality of user terminals. The user terminal may, similarly to the first embodiment, receive configuration information (parameter, for example, PUCCH resource) related to the OCC for the new PF.

In the present disclosure, a case that a plurality of PUCCHs are multiplexed, a case that CDM is performed on a plurality of PUCCHs, and a case that a plurality of PUCCHs are transmitted in the same time resource and the same frequency resource may be interchangeably interpreted. The plurality of PUCCHs may be transmitted from different user terminals.

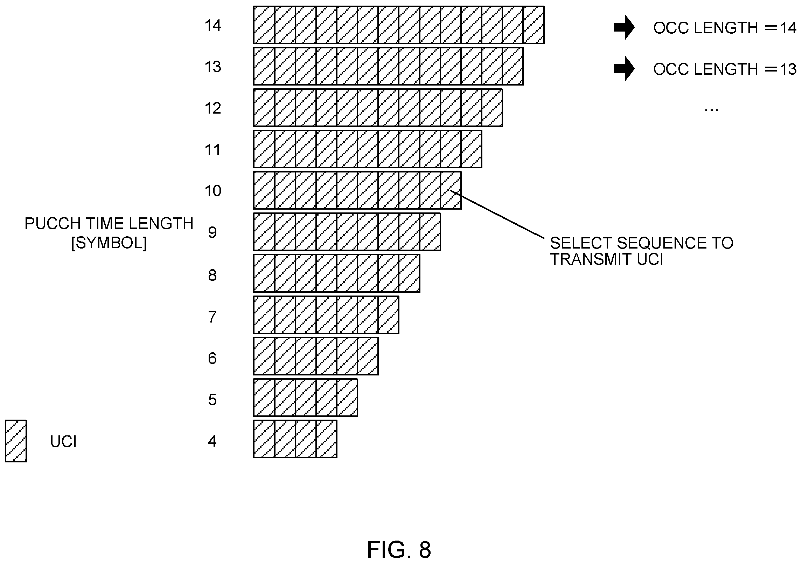

FIG. 8 is a diagram to show an example of symbols of a sequence-based long PUCCH to which a time domain OCC is applied. The user terminal may apply the time domain OCC to the new PF. An OCC length may be variable depending on the number of time symbols. The OCC length may be the number of time symbols of the PUCCH.

In existing PF 1, the OCC has been applied to each piece of UCI and each DMRS, and thus the OCC length in a case where 14 symbols and frequency hopping are not applied is up to 7. However, when the time domain OCC for the sequence-based long PUCCH is applied, the UCI is transmitted in all symbols, and thus the OCC length is up to 14.

When sequence hopping/frequency hopping is applied in an OCC application range, orthogonality of the OCC is lost. Thus, the OCC may be applied in a range without application of the sequence hopping/frequency hopping.

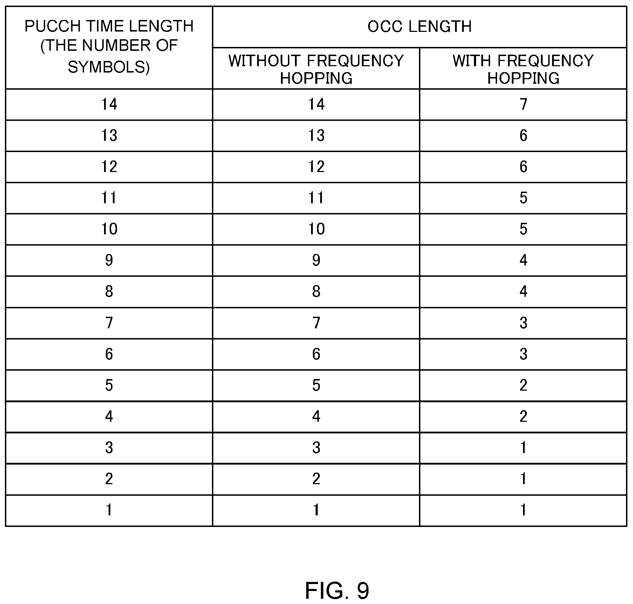

FIG. 9 is a diagram to show an example of relation between the numbers of PUCCH symbols and OCC lengths in a case where the time domain OCC for the sequence-based long PUCCH is applied.

As shown in FIG. 9, for example, when the number of symbols is 14 symbols and the frequency hopping is applied, the number of symbols for each of first hop and second hop is 7 symbols, and thus the OCC length may be 7 symbols. For example, when the number of symbols is 13 symbols and the frequency hopping is applied, the number of symbols for the first hop is 6 symbols and the number of symbols for the second hop is 7 symbols. Thus, when the number of symbols is an odd number, the numbers of symbols for the first hop and second hop are different from each other. In this case, the OCC length of the second hop may be the OCC length of the first hop + 1. The number of symbols of the first hop may be "floor (the number of PUCCH symbols/2)," and the number of symbols of the second hop may be "the number of PUCCH symbols - the number of symbols of the first hop."

In FIG. 9, a case where the frequency hopping is present or absent is described, but may be interpreted as a case where the first hop and second hop with a PRB index are the same or different from each other.

Note that the new PF may support only 4 to 14 symbols similarly to existing PF 1, or may support 1 to 14 symbols.

Existing PF 1 for the plurality of user terminals may be multiplexed by application of the time domain OCC to the new PF in the same time resource and the same frequency resource.

In a base sequence with DMRS symbols and UCI symbols of existing PF 1, a CAZAC sequence is used, and thus, for example, using different CS indices or the like can multiplex the sequence-based PUCCH and PF 1. Note, however, that it is necessary for this case to perform the sequence-based PUCCH in consideration of OCC allocation of existing PF 1.

According to the above-described third embodiment, it is possible to apply the time domain OCC for the sequence-based long PUCCH, and improvement in a multiplexing capacity of the user terminal is possible.

The above-described third embodiment may be employed in combination of the above-described first embodiment and second embodiment.

### <Fourth Embodiment>

In a new PF, an OCC may be applied to odd-numbered symbols or even-numbered symbols of PUCCH allocation resources.

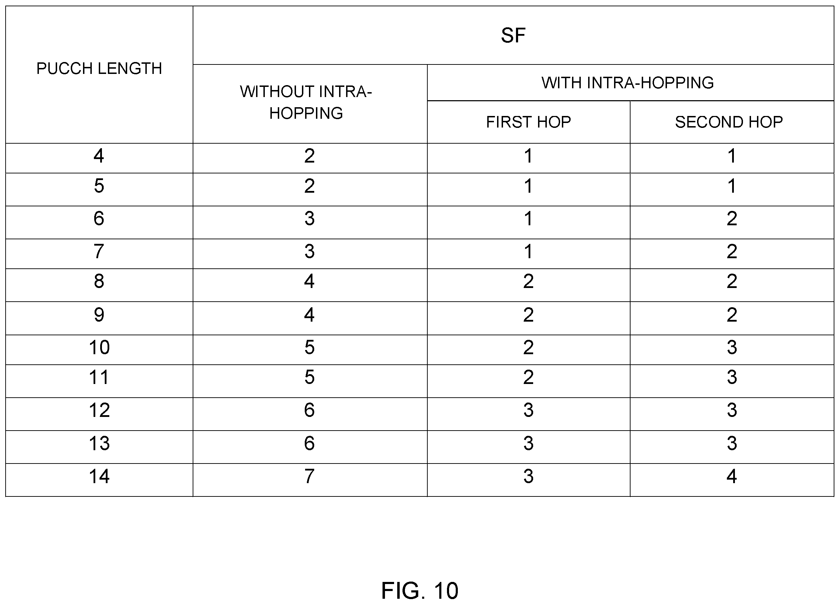

FIG. 10 is a diagram to show an example of the OCC applied to odd-numbered or even-numbered symbols of the new PF. In PF 1, the number of user terminals multiplexed by a time domain OCC is determined depending on PUCCH duration (long PUCCH duration (the number of symbols)). A maximum number of user terminals multiplexed by the time domain OCC can be rephrased as an OCC multiplexing capacity, an OCC length, a spreading factor (SF), or the like.

When the time domain OCC is applied to the odd-numbered or even-numbered symbols, as shown in FIG. 10, SFs of the time domain OCC for the new PF may be associated with PUCCH lengths (the numbers of PUCCH symbols). SFs without intra-slot hopping (no intra-slot hopping) and SFs with intra-slot hopping may be associated with the PUCCH lengths. When intra-slot hopping is performed once, the SFs with intra-slot hopping may include an SF for first hop (1st hop, pre-frequency-hopping, and hopping index m = 0) and an SF for second hop (2nd hop, post-frequency-hopping, and hopping index m = 1). Thus, a table indicating the SFs for respective values of the PUCCH lengths may be defined in specifications.

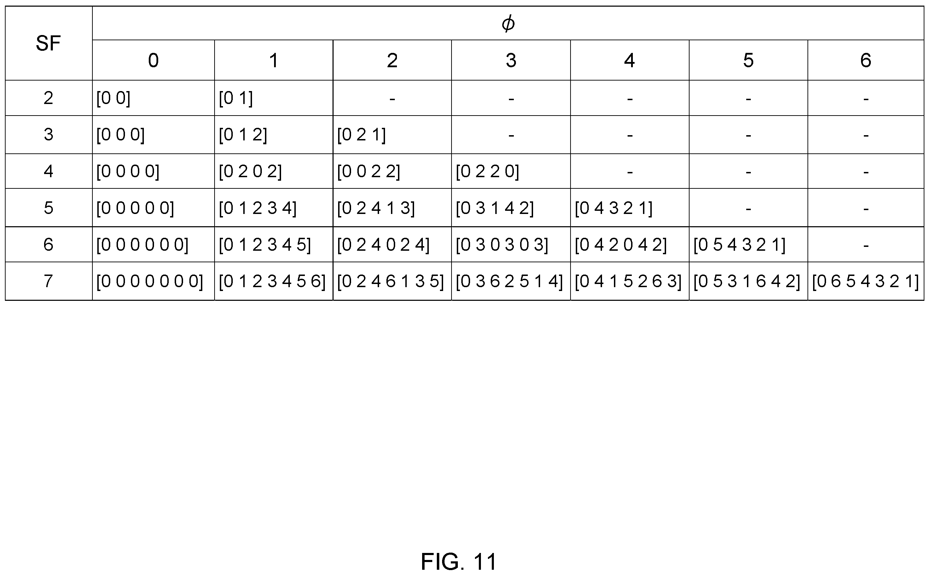

FIG. 11 is a diagram to show an example of relation between OCC lengths and OCC sequences.

As shown in FIG. 11, as many time domain OCCs as the SFs may be associated with SF values N. Here, the time domain OCC is expressed by exp(j2πϕ/N), and FIG. 11 shows ϕ to determine the time domain OCC. Thus, a table indicating time domain OCC sequences for the SF values may be defined in the specifications.

The association between the PUCCH lengths and SFs and the association between to the SFs and time domain OCCs may be configured beforehand, or may be defined in the specifications.

According to parameters included in a PUCCH resource, for frequency hopping, whether frequency hopping for the PUCCH resource is enabled or disabled may be indicated by a higher layer parameter (for example, PUCCH-frequency-hopping). An index of the first PRB (the lowest PRB) before frequency hopping or in a case where frequency hopping is not applied may be indicated by a higher layer parameter (for example, PUCCH-starting-PRB). An index of the first PRB (the lowest PRB) after frequency hopping may be indicated by (for example, PUCCH-2nd-hop-PRB).

The user terminal may apply one OCC to even-numbered symbol indices (0, 2, ...) of a PUCCH, and may apply another OCC to odd-numbered symbol indices (1, 3, ...) of the PUCCH.

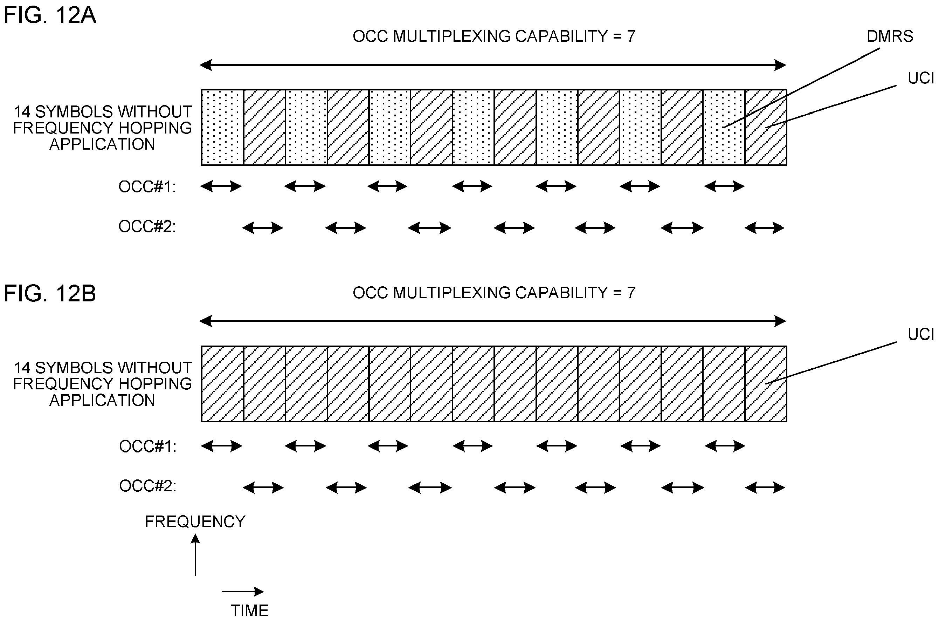

FIGS. 12A and 12B are diagrams to show examples of time domain OCC application without frequency hopping application to the new PF.

As shown in FIG. 12A, the user terminal to transmit the PUCCH using existing PF 1 may apply OCC #1 to DMRSs in even-numbered symbol indices of existing PF 1, and may apply OCC #2 to UCI in odd-numbered symbol indices of existing PF 1. As shown in FIG. 12B, in the same time resource and the same frequency resource, another user terminal to transmit the PUCCH using the new PF may apply OCC #1 to even-numbered symbol indices equivalent to the DMRSs of existing PF 1 in the new PF, and may apply OCC #2 to odd-numbered symbol indices equivalent to the UCI of existing PF 1 in the new PF.

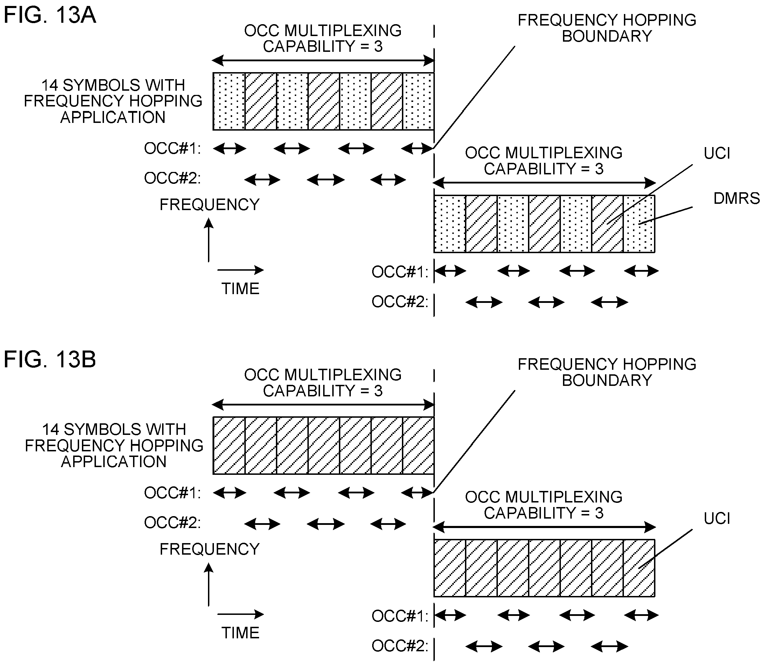

FIGS. 13A and 13B are diagrams to show examples of time domain OCC application with frequency hopping application to the new PF.

As shown in FIG. 13A, also in a case where frequency hopping is applied, the user terminal to transmit the PUCCH using existing PF 1 may apply OCC #1 to DMRSs in even-numbered symbol indices of existing PF 1, and may apply OCC #2 to UCI in odd-numbered symbol indices of existing PF 1. As shown in FIG. 13B, in the same time resource and the same frequency resource, another user terminal to transmit the PUCCH using the new PF may apply OCC #1 to even-numbered symbol indices equivalent to the DMRSs of existing PF 1 in the new PF, and may apply OCC #2 to odd-numbered symbol indices equivalent to the UCI of existing PF 1 in the new PF.

Therefore, existing PF 1 and the new PF can be orthogonalized by the OCC regardless of whether frequency hopping is applied, and thus efficient multiplexing with existing PF 1 is possible.

Whether to use a structure such as described above or to use a structure such as described in the third embodiment may be determined (or selected or switched) based on a user terminal capability, or may be determined (or selected or switched) with use of higher layer signaling and/or downlink control information (DCI). Here, it is only necessary that the higher layer signaling is, for example, RRC (Radio Resource Control) signaling, MAC (Medium Access Control) signaling, or the like.

In the new PF, the OCC may not be applied explicitly.

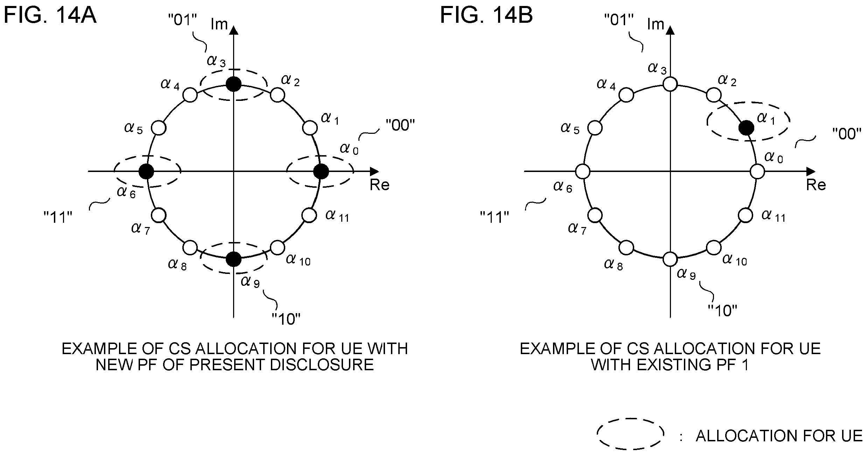

A base sequence used for the new PF may be the same as a base sequence used for existing PF 1, and a cyclic shift used for the new PF may be different from a cyclic shift used for existing PF 1. For example, as shown in FIG. 14A, the cyclic shift used for the new PF is α₀, α₃, α₆, and α₉, and as shown in FIG. 14B, the cyclic shift used for existing PF 1 is α₁. A base sequence used for the new PF in a DMRS symbol of existing PF 1 may be the same as a base sequence used for a DMRS of existing PF 1, and in the symbol, a cyclic shift used for the new PF may be different from a cyclic shift used for the DMRS of existing PF 1. A base sequence used for the new PF in a UCI symbol of existing PF 1 may be the same as a base sequence used for UCI of existing PF 1, and in the symbol, a cyclic shift used for the new PF may be different from a cyclic shift used for the UCI of existing PF 1.

Using such a base sequence and cyclic shift allows multiplexing of the new PF and existing PF 1 similarly to a case where the OCC ([+1], [+1, +1], [+1, +1, +1], [+1, +1, +1, +1], ..., or the like) is applied even when the OCC is not applied explicitly.

### <Fifth Embodiment>

Since UCI transmission with use of existing PF 3/PF 4 has, for example, a CRC, use of all energy for the UCI transmission fails, and thus a characteristic (coverage) is worse as compared to that of existing PF 1.

On the other hand, considering UCI transmission using CA/TDD, it is necessary that ACK/NACK and the like are also transmitted by 2 or more bits.

For example, at present, in a case of 4-point CS allocation for a user terminal, a method for enabling transmission of more bits by increasing the number of CS allocations to 8 points or 12 points is conceivable. However, in this case, for example, when 10-bit UCI is transmitted, it is necessary that 1024 different patterns of phase rotation amount replicas are generated in performing maximum likelihood detection on a NW side, and thus it is conceivable that a processing load of the NW side increases.

Thus, also in a case where a sequence-based long PUCCH is used, a method for appropriately performing transmission of UCI with 2 or more bits has been studied.

In the sequence-based long PUCCH, different UCI may be transmitted for each symbol or for each unit of certain symbols.

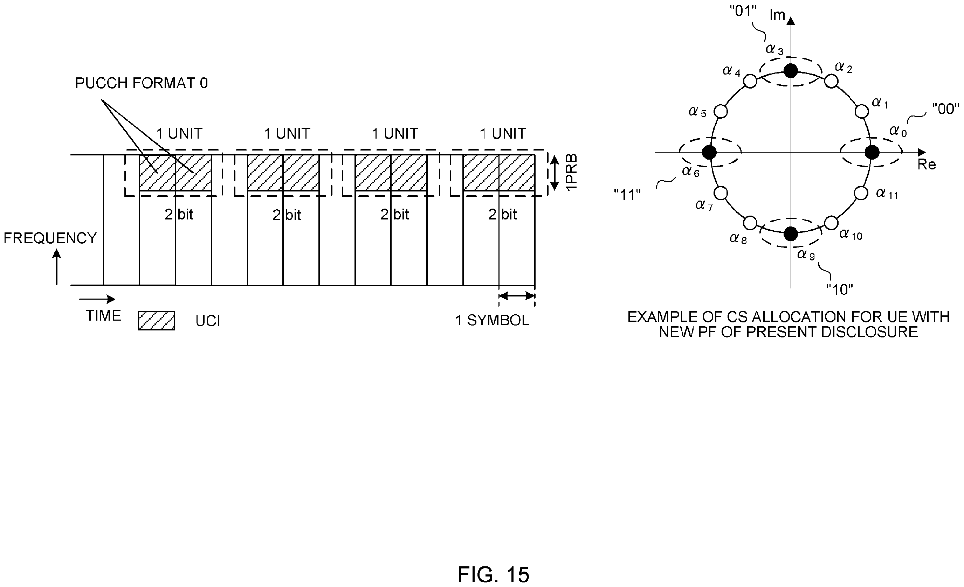

FIG. 15 is a diagram to show an example of transmission of UCI with 2 or more bits in the sequence-based long PUCCH.

As shown in FIG. 15, for example, when a new PF is constituted by 4 units, each unit is 2 symbols, and each unit transmits 2 bits, the user terminal can transmit 8 bit-UCI.

FIG. 15 shows a case where a time symbol of each unit is non-contiguous, but the present disclosure is not limited to this. For example, the above-described operation may be employed even when the time symbol is contiguous.

A method of sequence/CS allocation and sequence selection for each unit of the new PF may be similar to that for existing PF 0.

With respect to resource allocation of the new PF, a method similar to the method already described in the above-described second embodiment may be employed.

For the CS allocation, an initial CS index (CS set) common to each unit may be notified to the user terminal.

The user terminal may map UCI to each unit to select a CS (CS index offset) depending on the UCI of each unit. The user terminal may select an OCC (OCC index) depending on the UCI mapped to each unit.

According to a structure such as described above, for example, when the user terminal maps 2 bits for each unit of the new PF to transmit 8 bits by using 4 units, it is only necessary that the NW performs maximum likelihood detection in each unit, such as 4 patterns for 2 symbols of a first unit earlier in a time direction and 4 patterns for 2 symbols of a second unit, and thus reduction of the processing load of the NW side is possible.

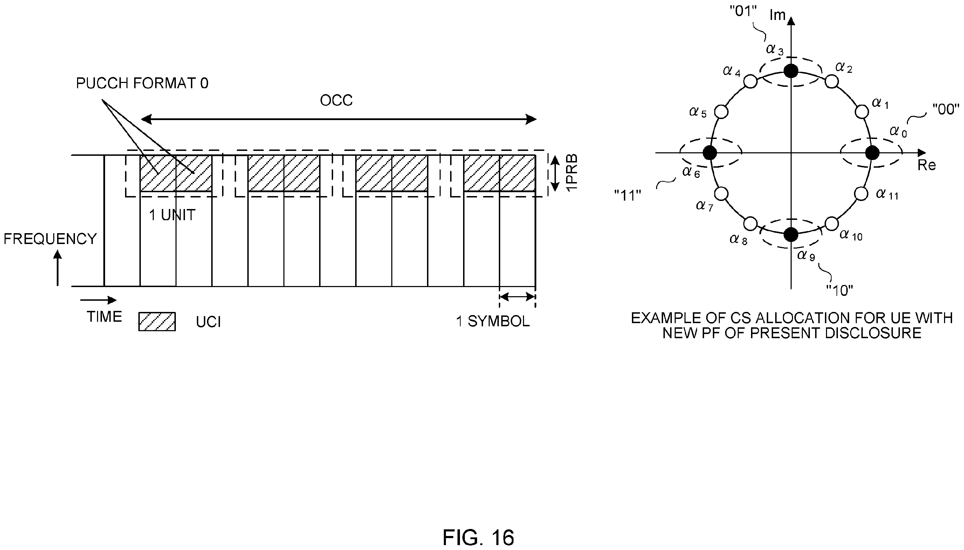

FIG. 16 is a diagram to show an example of transmission of UCI with 2 or more bits by CS selection/OCC selection in the sequence-based long PUCCH.

As shown in FIG. 16, the user terminal may transmit the UCI with the CS selection/OCC selection. For example, when an OCC with a length of 4 is applied to each unit, 2-bit UCI per unit can be transmitted by the OCC selection. When an OCC with a length of 8 is applied to each symbol, 3-bit UCI per symbol can be transmitted by the OCC selection.

In this case, frequency hopping/sequence hopping may not be applied in the OCC.

A method of sequence/CS allocation and sequence selection for each unit may be similar to that for existing PF 0.

With respect to resource allocation, a method similar to the method already described in the above-described second embodiment may be employed.

For the CS allocation, an initial CS index (CS set) common to each unit may be notified.

The user terminal may select a CS common to all units depending on the UCI.

The user terminal for which a plurality of OCCs are allocated may select the OCC index depending on the UCI.

FIG. 16 shows a case where a plurality of units are non-contiguous in a time domain, but the present disclosure is not limited to this. For example, the above-described operation may be employed even when the plurality of units are contiguous in the time domain.

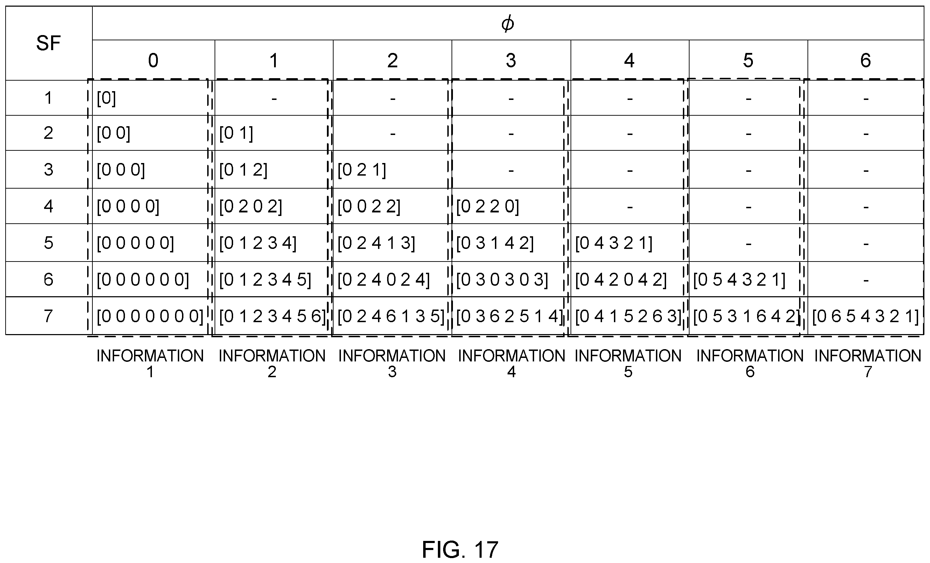

An association between OCC lengths, OCC indices, and OCC sequences may be defined in specifications, or may be configured by higher layer signaling. FIG. 17 is a diagram to show an example of an OCC sequence used for transmission of the UCI.

As shown in FIG. 17, the user terminal may transmit the UCI with the OCC selection.

For example, when the OCC length is 4, information 1 to 4 may correspond to bits of {00, 01, 11, 10}, respectively.

In this case, the number of bits may be variable depending on the OCC length. The OCC indices may be associated with bit sequences with gray codes.

According to the above-described fifth embodiment, it is possible to appropriately perform transmission of the UCI with 2 or more bits in the sequence-based long PUCCH.

### <Other Embodiments>

In the above-described first embodiment to fifth embodiment, sequence hopping/CS hopping may be applied.

For example, at least one of sequence group number u and sequence number v may be based on at least one of a higher layer parameter, a slot index, and a frequency hopping index (sequence group hopping or sequence hopping).

For example, for a low PAPR sequence for a PUCCH, sequence group number u = f*_{gh}* + f*ₛₛ* mod 30 and sequence number v in a sequence group depend on a higher layer parameter (pucch-GroupHopping). f*_{gh}* may be based on the higher layer parameter (pucch-GroupHopping), and may be based on slot index n_{*s*,*f*}^{µ} in a radio frame and frequency hopping index n*ₕₒₚ*. f*ₛₛ* may be nID mod 30. When a higher layer parameter (hoppingid) is configured, n*_{ID}* may be given by hoppingid, otherwise n*_{ID}* may be a cell ID. v may be based on the higher layer parameter (pucch-GroupHopping), and may be based on n_{*s*,*f*}^{µ} and n*ₕₒₚ*. A pseudo-random sequence may be used for calculation of f*_{gh}* and v.

For example, when intra-slot frequency hopping is enabled by a higher layer parameter (intraSlotFrequencyHopping), frequency hopping index n*ₕₒₚ* = 0 for first hop and frequency hopping index n*ₕₒₚ* = 1 for second hop.

A cyclic shift (CS) α for the PUCCH may be based on at least one of a slot index (slot number) and a symbol index (symbol number) (CS hopping).

For example, for a low PAPR sequence for the PUCCH, CS α may be based on slot index n_{*s*,*f*}^{µ} in a radio frame, initial CS index m₀, m*_{CS}* being a value (offset) corresponding to UCI (for example, HARQ-ACK information), and an OFDM symbol number.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

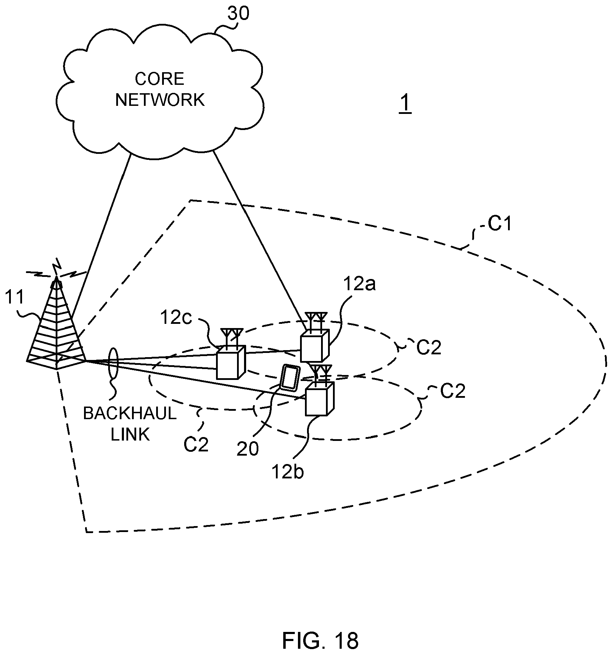

FIG. 18 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

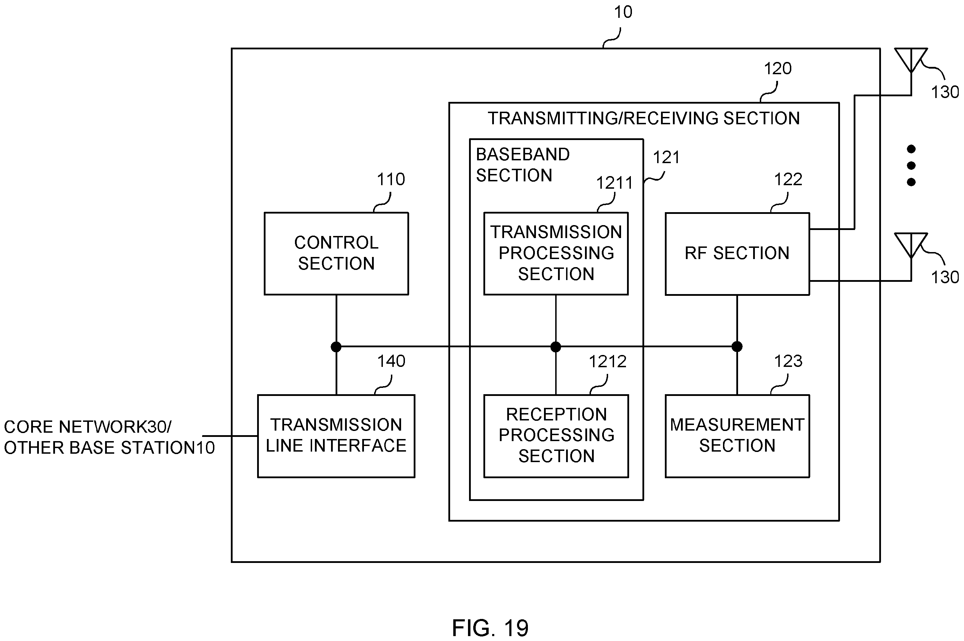

FIG. 19 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

Note that the transmitting/receiving section 120 may transmit configuration information indicating the number of symbols greater than 2 for a physical uplink control channel (PUCCH). The control section 110 may control, based on the configuration information, reception of the PUCCH to which a cyclic shift based on uplink control information is applied.

The transmitting/receiving section 120 may transmit configuration information related to an orthogonal cover code (OCC). The control section 110 may control, based on the configuration information, reception of a physical uplink control channel (PUCCH) to which a cyclic shift based on uplink control information and the orthogonal cover code are applied.

### (User Terminal)

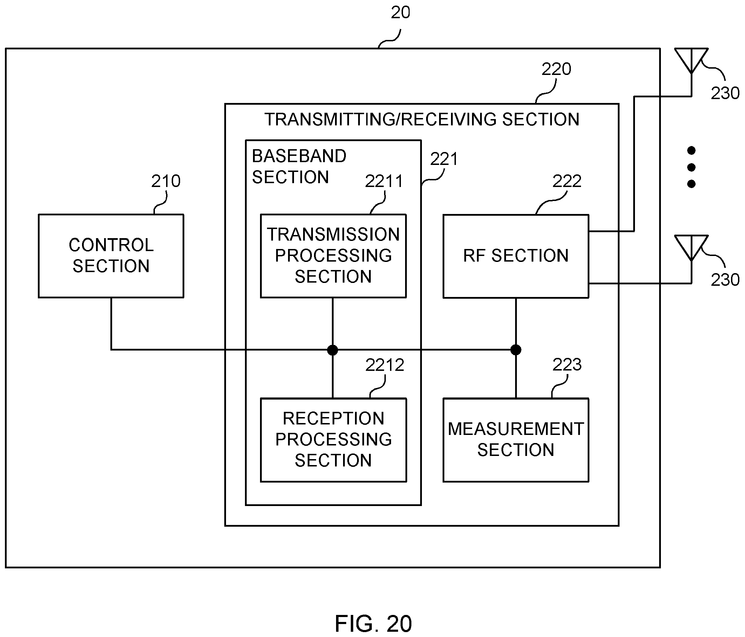

FIG. 20 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive configuration information indicating the number of symbols greater than 2 for a physical uplink control channel (PUCCH). The control section 210 may apply, based on the configuration information, a cyclic shift based on uplink control information to the PUCCH (the first embodiment).

The control section 210 may map the PUCCH in a plurality of time resources, and each of the plurality of time resources may have a same length (the second embodiment).

The control section 210 may apply, in each of the plurality of time resources, a cyclic shift based on same uplink control information to the PUCCH (the second embodiment).

The transmitting/receiving section 220 may receive configuration information related to an orthogonal cover code (OCC). The control section 210 may apply, based on the configuration information, a cyclic shift based on uplink control information and the orthogonal cover code to a physical uplink control channel (PUCCH) (the third embodiment, the fourth embodiment, and the fifth embodiment).

The control section 210 may apply the OCC to at least one of an even-numbered symbol index and an odd-numbered symbol index of the PUCCH (the fourth embodiment).

The control section 210 may apply a first OCC to a symbol to which a demodulation reference signal of a PUCCH format 1 is mapped in the PUCCH, and may apply a second OCC to a symbol to which uplink control information of the PUCCH format 1 is mapped in the PUCCH (the fourth embodiment).

The control section 210 may allocate the PUCCH in a plurality of time resources to map different uplink control information to the plurality of time resources, and each of the plurality of time resources may have a same length (the fifth embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

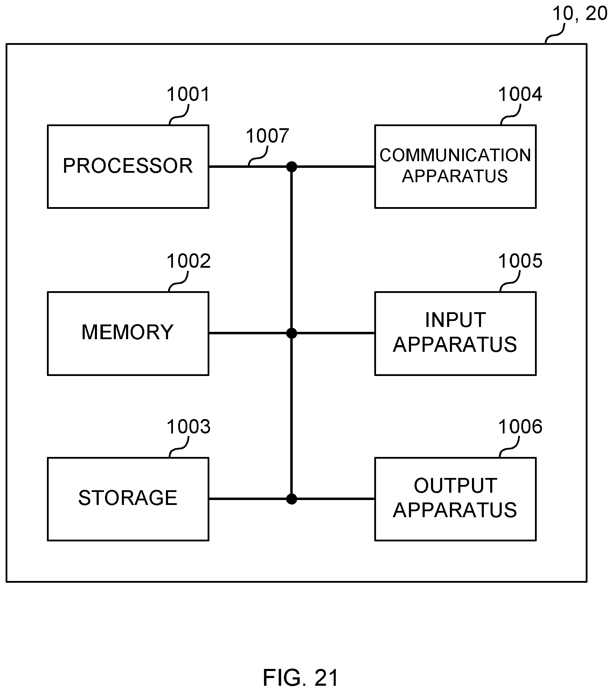

For example, a base station, a user terminal, and so on according to one embodiment of the present disclosure may function as a computer that executes the processes of the radio communication method of the present disclosure. FIG. 21 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives configuration information indicating the number of symbols greater than 2 for a physical uplink control channel (PUCCH); and
a control section that applies, based on the configuration information, a cyclic shift based on uplink control information to the PUCCH.

2. The terminal according to claim 1, wherein
the control section maps the PUCCH in a plurality of time resources, and each of the plurality of time resources has a same length.

3. The terminal according to claim 2, wherein
the control section applies, in each of the plurality of time resources, a cyclic shift based on same uplink control information to the PUCCH.

4. The terminal according to claim 2 or 3, wherein
a phase of the uplink control information is contiguous when the plurality of time resources exist in a same slot.

5. A radio communication method for a terminal, the radio communication method comprising:
receiving configuration information indicating the number of symbols greater than 2 for a physical uplink control channel (PUCCH); and
applying, based on the configuration information, a cyclic shift based on uplink control information to the PUCCH.

6. A base station comprising:
a transmitting section that transmits configuration information indicating the number of symbols greater than 2 for a physical uplink control channel (PUCCH); and
a control section that controls, based on the configuration information, reception of the PUCCH to which a cyclic shift based on uplink control information is applied.
